# EUROPÄISCHE PATENTSCHRIFT

(11) **EP 1 448 087 B1**
(45) Veröffentlichungstag und Bekanntmachung des Hinweises auf die Patenterteilung: **16.04.2008**
(21) Anmeldenummer: 02779524.4
(22) Anmeldetag: 31.10.2002
(51) Int. Cl.: A47L 15/42

(54) **ZWEITEILIGER SPÜLBEHÄLTER FÜR EINEN GESCHIRRSPÜLER UND VERFAHREN ZUR HERSTELLUNG EINES ZWEITEILIGEN SPÜLBEHÄLTERS FÜR GESCHIRRSPÜLER**
TWO-PIECE WASHING TANK FOR A DISHWASHER AND A METHOD FOR MANUFACTURING A TWO-PIECE WASHING TANK FOR DISHWASHERS
CUVE DE LAVAGE EN DEUX PARTIES DESTINEE A UN LAVE-VAISSELLE ET PROCEDE DE FABRICATION D'UNE CUVE DE LAVAGE EN DEUX PARTIES POUR LAVE-VAISSELLE

(30) Priorität: 16.11.2001 DE 10156423
(43) Veröffentlichungstag der Anmeldung: 25.08.2004
(73) Patentinhaber: BSH Bosch und Siemens Hausgeräte GmbH, 81739 München (DE)
(72) Erfinder: KÜCÜK, Cengiz, 89428 Syrgenstein (DE); OPPEL, Anton, 89428 Syrgenstein (DE); SEESSLE, Manfred, 89547 Gerstetten-Dettingen (DE); THIBAUT, Wilhelm, 89567 Sontheim (DE); STICKEL, Ernst, 89537 Giengen (DE); AMANN, Klaus, 89537 Giengen (DE); JERG Helmut, 89537 Giengen (DE)
(86) Internationale Anmeldenummer: PCT/EP2002/012220
(87) Internationale Veröffentlichungsnummer: WO 2003/041557

(56) Entgegenhaltungen:
- EP-A- 0 556 787
- DE-A- 2 420 302
- DE-A- 10 065 678
- US-A- 5 368 379

## Beschreibung

Die Erfindung betrifft einen Geschirrspüler bestehend aus einem Montageboden aus Kunststoff und einem Spülbehälter, sowie ein Verfahren zum Verbinden des Montageboden mit dem Spülbehälter.

Seit langem sind Spülbehälter aus Edelstahl bekannt, wobei der Gesamtkörper des Spülbehälters aus einem Blechzylinder extrudiert wird und die Rückwand des Spülbehälters mittels Fügeverfahren, wie beispielsweise Schweißen, an den Edelstahlkorpus befestigt wird. Nach Fertigstellung des stählernen Spülbehälters, wird dieser auf einen sogenannten Montageboden fixiert und die notwendigen Einrichtungen wie Pumpentopf, Sieb etc. in den stählernen Spülbehälter bzw. den darunter befindlichen Montageboden eingebracht und dort befestigt. Neben den Materialkosten für Edelstahl ist ferner das Verfahren zum Herstellen des stählernen Spülbehälters zeit- und kostenaufwendig und nur über eine Vielzahl von unterschiedlichen Verfahrensschritten möglich, wobei die jeweiligen Arbeitsschritte in verschiedenen Spezialwerkzeugen stattfinden.

Aus der US 53 68 379 ist eine Geschirrspülmaschine mit einem in der Hauptsache zweiteiligen Behandlungsraum bekannt, bestehend aus einem Montageboden aus Kunststoff und einem Spülbehälter, dessen Seitenwände im Wesentlichen aus Edelstahl ausgebildet sind. Ein wesentlicher Bestandteil der Oberseite des Montagebodens aus Kunststoff bildet den Boden des Spülbehälters. Die Verbindung zwischen Montageboden und Spülbehälter wird durch in Bohrung eingesetzte Schraubelemente hergestellt, die an den Seiten des Spülbehälters angebracht sind.

Aufgabe der vorliegenden Erfindung ist es daher einen Geschirrspüler, bzw. einen Spülbehälter bereitzustellen, der einerseits die Vorteile eines inerten, stählernen Spülbehälters aufweisen sowie andererseits durch ein rasches Verfahren hergestellt werden können.

Diese Aufgabe wird durch den erfindungsgemäßen Geschirrspüler mit den Merkmalen gemäß Anspruch 1, sowie durch das Erfindungsgemäße Verfahren mit den Merkmalen gemäß Anspruch 8 gelöst. Vorteilhafte Weiterbildungen der Erfindung sind in den Unteransprüchen gekennzeichnet.

Bei dem erfindungsgemäßen Geschirrspüler, bestehend aus einem Montageboden aus Kunststoff und einem Spülbehälter, ist ein wesentlicher Bestandteil der Oberseite des Montagebodens aus Kunststoff gefertigt und bildet den Boden des Spülbehälters.

Dabei sind die Seitenwände des Spülbehälters im wesentlichen aus Edelstahl ausgebildet.

Durch die erfindungsgemäße Kombination von Kunststoff und Edelstahl wird erreicht, dass die Vorteile des Wertstoffs Edelstahl für die Seitenwände, die Rückwand und die Innenverkleidung der Tür genutzt werden, und für die Ausgestaltung des Bodens des Spülbehälters, in den mehrere Baugruppen angeordnet werden müssen, die Vorteile des Werkstoffs Kunststoff genutzt werden. Besonders vorteilhaft ist hierbei, dass alle Anschlussvorkehrungen am Montageboden bereits während des einen Herstellungsschritts erfolgt und somit eine erhebliche Zeitersparnis gegenüber dem herkömmlichen Verfahren vorliegt.

Dabei sind die Verbindungsbereiche zwischen dem Montageboden aus Kunststoff und dem Spülbehälter aus Edelstahl an den Seitenwänden und der Rückwand des Spülbehälters vorgesehen.

Die Verbindungsbereiche werden durch eine nutförmige Aufnahme am Montageboden aus Kunststoff und einem korrespondierenden Einsatzabschnitt an den Seitenwänden und der Rückwand des Spülbehälters aus Edelstahl ausgebildet.

Um eine wasserdichte und dauerhafte Verbindung zwischen dem Spülbehälter aus Edelstahl und dem Montageboden aus Kunststoff herzustellen, insbesondere unter Berücksichtigung der Lebensdauer eines Geschirrspülers, wird die nutförmige Aufnahme mit einem Kunststoff mit Klebeeigenschaften gefüllt, in den der Einsatzabschnitt an den Seitenwänden und der Rückwand des Spülbehälters aus Edelstahl eintaucht und verbleibt.

Zweckmäßigerweise ist der Kunststoff mit Klebeeigenschaften so ausgebildet, dass aufgrund seiner Viskosität ein Aufbringen in die nutförmige Aufnahme technisch unproblematisch ist und die Verarbeitungszeit des Kunststoffs mit Klebeeigenschaften so ausgestaltet werden kann, dass die korrespondierenden Einsatzabschnitte an den Seitenwänden und der Rückwand des Spülbehälters aus Edelstahl während der Montage des Spülbehälters in die nutförmige Aufnahme, welche mit dem Kunststoff mit Klebeeigenschaften gefüllt ist, eingebracht werden können.

Vorteilhafterweise bindet der in die nutförmige Aufnahme des Montagebodens eingebrachte Kunststoff mit Klebeeigenschaften nach einer gewissen Zeit mit oder ohne Temperatureinwirkung ab und bildet so eine unlösbare Verbindung, sowohl mit dem Montageboden aus Kunststoff als auch mit dem Spülbehälter aus Edelstahl. Durch die umfänglich in der nutförmigen Aufnahme des Montagebodens singebrachten Kunststoff mit Klebeeigenschaften und die ebenfalls lückenlose Adhäsionsverbindung des Spülbehälters aus Edelstahl mit dem Kunststoff mit Klebeeigenschaften wird erfindungsgemäß erzielt, dass der Verbindungsbereich zwischen dem Montageboden aus Kunststoff und dem Spülbehälter aus Edelstahl wasserdicht ist.

Neben diesen Wasserdichtigkeitsanforderungen ist es weiterhin ein Vorteil des erfindungsgemäßen Geschirrspülers und des erfindungsgemäßen Verfahrens, dass zwischen dem Montageboden aus Kunststoff und dem Spülbehälter aus Edelstahl eine ästhetisch hochwertige Verbindung entsteht, da für den Anwender, der lediglich den Innenbereich des Spülbehälters in Augenschein nehmen kann, eine bündige Verbindung zwischen dem Montageboden aus Kunststoff und dem Spülbehälter aus Edelstahl wahrgenommen wird und ferner, diese im wesentlichen fugenfreie Verbindung zwischen dem Montageboden aus Kunststoff und dem Spülbehälter aus Edelstahl, eine hygienische Verbindung ausbildet, in die keine Speisereste eindringen können.

Zur Verbesserung der Verbindung zwischen dem Spülbehälter aus Edelstahl und dem Kunststoff mit Klebeeigenschaften, welcher in die nutförmige Aufnahme im Montageboden aus Kunststoff eingebracht wird, ist der Einsatzabschnitt an den Seitenwänden und der Rückwand des Spülbehälters aus Edelstahl vorteilhafterweise mit Ausbrüchen versehen, durch die der viskose Kunststoff mit Klebeeigenschaften beim Eintauchen des Einsatzabschnitts in die nutförmige Aufnahme dringen kann und so neben der adhäsiven Verbindung ferner eine formschlüssige Verbindung zwischen Kunststoff mit Klebeeigenschaften und dem stählernen Einsatzabschnitt ausbildet.

Zweckmäßigerweise sind die Ausbrüche im Einsatzabschnitt des Spülbehälters über die gesamte Länge verteilt und können beispielsweise als Langloch oder Kreuzloch ausgebildet sein.

Vorteilhafterweise ist der Einsatzabschnitt V-förmig ausgebildet, wobei ein Schenkel des V in die Seitenwand des Spülbehälters übergeht und der andere Schenkel des V in der nutförmigen Aufnahme versenkbar ausgebildet ist. Durch diese V-förmige Ausbildung wird erreicht, dass eine möglichst große Oberfläche des Einsatzbereichs mit dem Kunststoff mit Klebeeigenschaften in Berührung kommt und somit einerseits die Dichtigkeit als auch die mechanischen Haltefestigkeit zwischen dem Spülbehälter und dem Montageboden verbessert wird.

Es ist auch möglich den Einsatzbereich nicht V-förmig auszubilden, sondern an dessen Ende eine L- oder U-förmige Kontur vorzusehen, solange die mechanischen Eigenschaften und Dichtigkeitsanforderungen sichergestellt werden können.

Nachfolgend wird die Erfindung anhand von Zeichnungen näher erläutert. Es zeigen:
- Figur 1: eine perspektivische Darstellung eines Schnittes durch einen Grundkörper des erfindungsgemäßen Geschirrspülers bzw. erfindungsgemäßen Spülbehälters mit daran montierten Montageboden,
- Figur 2: eine vergrößerte Schnittdarstellung durch den Verbindungsbereich zwischen Spülbehälter und Montageboden, wobei der Einsatzabschnitt V-förmig ausgebildet ist,
- Figur 3: eine vergrößerte Schnittdarstellung durch den Einsatzabschnitt gemäß Figur 2, wobei jedoch der Einsatzabschnitt Ausbrüche aufweist,

- Figur 4: eine vergrößerte Schnittdarstellung durch den Verbindungsbereich zwischen Spülbehälter und Montageboden, wobei eine weitere vorteilhafte Ausführungsform des Einsatzabschnitt gezeigt ist, und
- Figur 5: eine vergrößerte Schnittdarstellung durch den Verbindungsbereich, wobei der Einsatzabschnitt U-förmig mit Ausbrüchen ausgebildet ist.

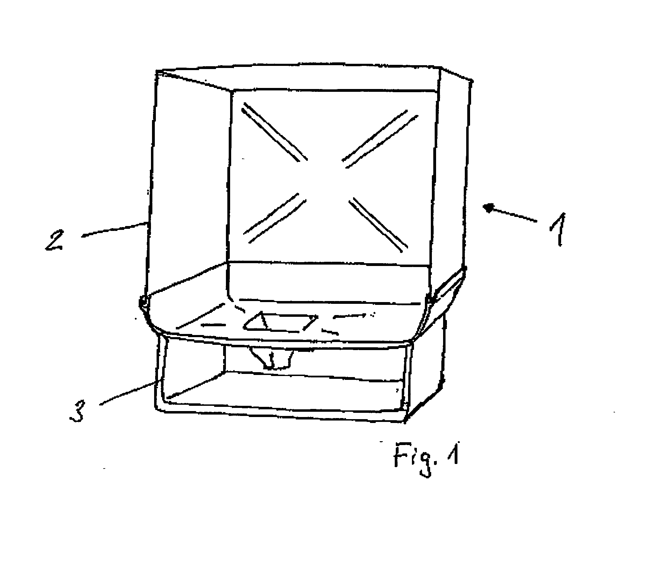

In der Anordnung gemäß Figur 1 ist ein Grundkörper eines erfindungsgemäßen Geschirrspülers 1 dargestellt, bestehend aus einem Montageboden 3 und einem Spülbehälter 2. Durch die kompakte Herstellungsweise des Montagebodens 3 ist es möglich in nur einem Arbeitsgang den Montageboden 3, der aus Kunststoff besteht, einstückig herzustellen, beispielsweise in einem Spritzgußverfahren. Bei dieser effizienten Herstellungsweise kann bereits sichergestellt werden, dass alle Anschlussbereiche wie beispielsweise Pumpentopf, Laugenpumpe, Filter etc. mit Anschlußmöglichkeiten versehen sind, so dass der Spülbehälter 2, nur noch wenige notwendigen Anschlussmöglichkeiten aufweisen muß. Neben der in Figur 1 dargestellten Möglichkeit den Verbindungsbereich zwischen Montageboden 3 und Spülbehälter 2 über einen Steg von gewisser Höhe zu realisieren, ist es ebenso möglich den Verbindungsbereich unmittelbar an die Oberseite des Montagebodens 3 anzuordnen, so dass lediglich die Oberseite des Montagebodens 3 den Boden des Spülbehälters ausbildet.

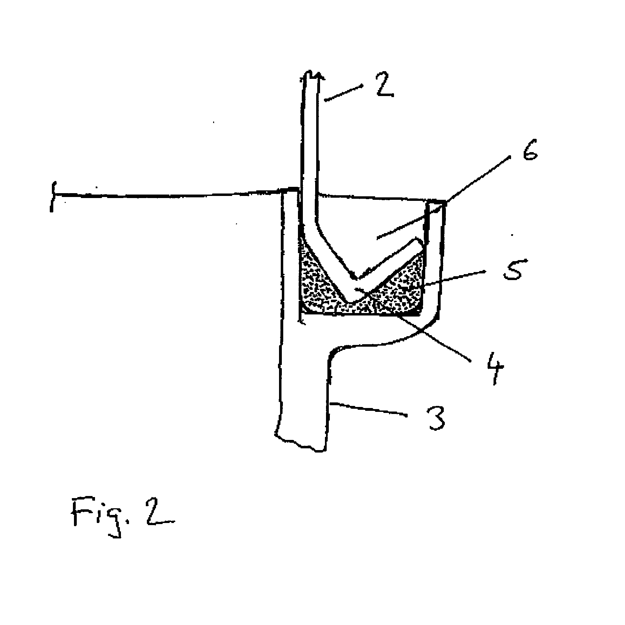

In der vergrößerten Detailansicht des Verbindungsbereichs gemäß Figur 2 ist die nutförmige Aufnahme 6 am Montageboden 3, sowie der zur Dichtung zwischen Spülbehälter 2 und Montageboden 3 vorgesehene Kunststoff 5 mit Klebeeigenschaften gezeigt. In der Vorbereitung für die Montage wird in die nutförmige Aufnahme 6 des Montagebodens 3 der Kunststoff 5 mit Klebeeigenschaften eingebracht, wobei dieser z.B. strangartig vorliegt oder als Strang eingespritzt wird, um sicherzustellen, dass der Kunststoff 5 mit Klebeeigenschaften lückenlos in der nutförmigen Aufnahme 6 ausliegt. Der Kunststoff 5 mit Klebeeigenschaften liegt in viskoser Form vor oder wird in viskose Form z.B. durch Erwärmen gebracht und der Einsatzabschnitt 4 des Spülbehälters 2 wird in den viskosen Kunststoff 5 mit Klebeeigenschaften gepreßt, so dass sich dieser so in der nutförmigen Aufnahme 6 des Montagebodens 3 ausbreitet, wodurch eine wasserdichte Verbindung zwischen dem Montageboden 3 und dem Einsatzabschnitt 4 ausgebildet wird.

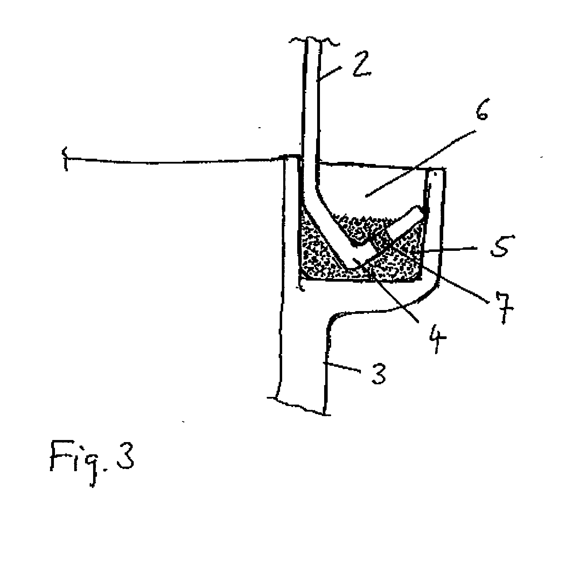

Nach einer vorteilhaften Ausführungsform der Erfindung ist der Einsatzbereich 6 mit Ausbrüchen 7 versehen, wie in Figur 3 gezeigt, so dass der viskose Kunststoff 5 mit Klebeeigenschaften während des Einpressens des Einsatzabschnitts 4 durch diese Ausbrüche 7 gepreßt wird und so nach der Aushärtung des Kunststoffs 5 mit Klebeeigenschaften eine formschlüssige Verbindung mit dem Einsatzabschnitt 4 des Spülbehälters 2 ausbildet.

Bei der Montage des Spülbehälters 2 ist stets darauf zu achten, dass die Verarbeitung des Kunststoff 5 mit Klebeeigenschaften innerhalb der nutförmigen Aufnahme 6 so vonstatten geht, dass keine Luftkammern gebildet werden, welche die Wasserdichtigkeit negativ beeinflussen könnten.

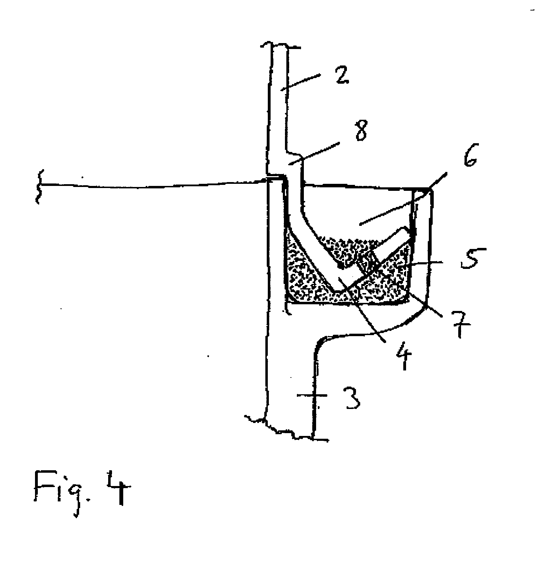

Wie in der Anordnung gemäß Figur 4 gezeigt, wird bei einer weiteren vorteilhaften Ausführungsform der vorliegenden Erfindung eine Stufe 8 in die Seitenwände und Rückwand des Spülbehälters 2 eingebracht, die so angeordnet und ausgebildet ist, dass nach der Montage eine im wesentlichen bündige Oberfläche im Innenraum des Spülbehälters wahrgenommen werden kann. Vorteilhafterweise dient die Stufe 8 neben ästhetischen Zwecken auch der Justierbarkeit während des Montageprozesses, da der Spülbehälter 2 auf der Stufe 8 aufgesetzt werden kann, während der Einsatzabschnitt 4 in den viskosen Kunststoff 5 mit Klebeeigenschaften eingetaucht und somit eine vorbestimmte Halteposition des Einsatzabschnitts 4 ausgebildet wird.

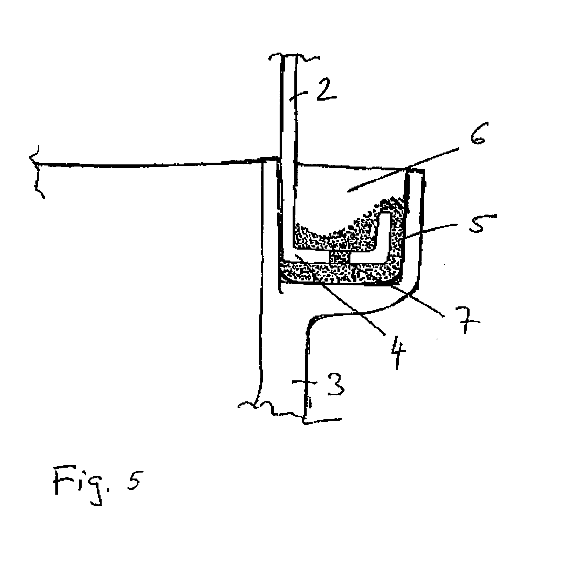

In der weiteren vorteilhaften Ausführungsform gemäß Figur 5 ist ein Einsatzabschnitt 4 U-förmig ausgebildet und so dimensioniert, dass der viskose Kunststoff 5 mit Klebeeigenschaften während des Einpressens des Einsatzabschnitts 4 in die nutförmige Aufnahme 6 des Montagebodens 3 seitlich an dem Einsatzabschnitt 4 vorbeiströmen kann und so eine nahezu vollständige Abdeckung des Einsatzabschnitts 4 ausbildet, so dass die mechanische Verbindung zwischen Spülbehälter 2 und Montageboden 3 gegenüber den anderen Ausführungsformen erhöht wird, sowie zusätzlich bereits durch einfache optische Überprüfung die Wasserdichtigkeit festgestellt werden kann.

Bei einer bevorzugten Ausführungsform der vorliegenden Erfindung wird der Klebstoff Sikaflex-221^{®} der Sika Industry verwendet, jedoch können auch andere Einkomponenten Polyurethan Klebstoffe verwendet werden.

Der Sikaflex-221^{®} wird vorteilhafterweise so verarbeitet, dass nach einem Zeitraum von 45-60 Minuten eine Hautbildung einsetzt und der Spülbehälter aus Edelstahl seine genaue Position eingenommen hat, in der er bis zum Aushärten des Klebstoffs verbleibt. Die Durchhärtgeschwindigkeit beträgt bei dem Klebstoff Sikaflex-221^{®} durchschnittlich 3mm/24h.

Bei der Verwendung der Klebstoffe ist sicherzustellen, dass die Betriebstemperaturen des Geschirrspülers die Dichtigkeitseigenschaften und mechanische Eigenschaften der Verbindung nicht negativ beeinflussen. Die maximale Betriebstemperatur im Kunststoff mit Klebeeigenschaften liegt bei den höchsten Betriebstemperaturen des Geschirrspülers bei ca. 80°- 90°C.

## Patentansprüche

1. Geschirrspülmaschine, bestehend aus einem Montageboden (3) aus Kunststoff und einem Spülbehälter (2), wobei ein wesentlicher Bestandteil der Oberseite des Montagebodens (3) aus Kunststoff den Boden des Spülbehälters (2) bildet und die Seitenwände des Spülbehälters (2) im Wesentlichen aus Edelstahl gebildet sind, wobei Verbindungsbereiche zwischen dem Montageboden (3) aus Kunststoff und dem Spülbehälter (2) aus Edelstahl an den Seitenwänden und der Rückwand des Spülbehälters (2) vorgesehen sind, wobei die Verbindungsbereiche durch eine nutförmige Aufnahme (6) am Montageboden (3) aus Kunststoff und einem korrespondierenden Einsatzabschnitt (4) an den Seitenwänden und der Rückwand des Spülbehälters (2) aus Edelstahl gebildet sind,
**dadurch gekennzeichnet, dass**
die nutförmige Aufnahme (6) mit einem Kunststoff (5) mit Klebeeigenschaften gefüllt ist.

2. Geschirrspülmaschine nach Anspruch 1, **dadurch gekennzeichnet, dass** der Einsatzabschnitt (4) an den Seitenwänden und der Rückwand des Spülbehälters (2) bei der Montage des Spülbehälters (2) in den Kunststoff (5) mit Klebeeigenschaften eintaucht und darin verbleibt.

3. Geschirrspülmaschine nach Anspruch 2, **dadurch gekennzeichnet, dass** der Einsatzabschnitt (4) an den Seitenwänden und der Rückwand des Spülbehälters (2) aus Edelstahl mit Ausbrüchen (7) versehen ist, die ein Durchdringen des Einsatzabschnitts (4) mit Kunststoff (5) mit Klebeeigenschaften erlauben.

4. Geschirrspülmaschine nach einem der vorherigen Ansprüche, **dadurch gekennzeichnet, dass** die Innenseite des Spülbehälters (2) an dem Verbindungsbereich lediglich eine Stufe aufweist, die den Übergangsbereich zwischen Kunststoff und Edelstahl markiert.

5. Geschirrspülmaschine nach einem der Ansprüche 1 bis 3 **dadurch gekennzeichnet, dass** die Innenseite des Spülbehälters (2) an dem Verbindungsbereich zwischen Kunststoff und Edelstahl im wesentlich frei von Stufen ausgebildet ist.

6. Geschirrspülmaschine nach einem der vorherigen Ansprüche, **dadurch gekennzeichnet, dass** der Spülbehälter (2) aus Edelstahl an seinem Einsatzabschnitt (4) so abgekantet ist, dass ein V-förmiger Abschnitt ausgebildet wird, der mit seinem Spitzenbereich in den viskosen Kunststoff (5) mit Klebeeigenschaften eintaucht, diesen verdrängt und so eine unlösbare Verbindung mit dem Montageboden (3) aus Kunststoff ausbildet.

7. Geschirrspülmaschine nach Anspruch 5, **dadurch gekennzeichnet, dass** der Einsatzbereich (4) mit Ausbrüchen (7) versehen ist, durch die der verdrängte Kunststoff (5) mit Klebeeigenschaften dringt und nach dem Aushärten eine formschlüssige Verbindung zwischen Kunststoff (5) mit Klebeeigenschaften und Spülbehälter (2) aus Edelstahl bildet.

8. Verfahren zum Verbinden eines aus Kunststoff bestehenden Montagebodens (3) eines Geschirrspülmaschine mit einem Spülbehälter (2), **dadurch gekennzeichnet, dass** der Spülbehälter (2) aus Edelstahl in einer mit einem Kunststoff (5) mit Klebeeigenschaften gefüllten nutförmigen Aufnahme (6) des Montagebodens (3) eingesetzt wird, den viskosen Kunststoff (5) mit Klebeeigenschaften während der Montage verdrängt, der Kunststoff (5) mit Klebeeigenschaften schließlich aushärtet und den Montageboden (3) aus Kunststoff so mit dem Spülbehälter (2) aus Edelstahl unlösbar verbindet.

## Claims

1. Dishwashing machine, consisting of a mounting base (3) of plastics material and a rinsing container (2), wherein a substantial component of the upper side of the mounting base (3) of plastics material forms the base of the rinsing container (2) and the side walls of the rinsing container (2) are formed substantially from stainless steel, wherein connecting regions between the mounting base (3) of plastics material and the rinsing container (2) of stainless steel are provided at the side walls and the back wall of the rinsing container (2) and wherein the connecting regions are formed by a groove-shaped receptacle (6) at the mounting base (3) of plastics material and a corresponding insert section (4) at the side walls and the back wall of the rinsing container (2) of stainless steel, **characterised in that** the groove-shaped receptacle (6) is filled with a synthetic material (5) with adhesive properties.

2. Dishwashing machine according to claim, **characterised in that** the insert section (4) at the side walls and the back wall of the rinsing container (2) enters into the synthetic material (5) with adhesive properties during mounting of the rinsing container (2) and remains therein.

3. Dishwashing machine according to claim 2, **characterised in that** the insert section (4) at the side walls and the back wall of the rinsing container (2) of stainless steel is provided with breaches (7) which allow penetration of the insert section (4) with synthetic material (5) with adhesive properties.

4. Dishwashing machine according to one of the preceding claims, **characterised in that** the inner side of the rinsing container (2) has at the connecting region merely a step which marks the transition region between plastics material and stainless steel.

5. Dishwashing machine according to one of claims 1 to 3, **characterised in that** the inner side of the rinsing container (2) is formed to be substantially free of steps at the connecting region between plastics material and stainless steel.

6. Dishwashing machine according to one of the preceding claims, **characterised in that** the rinsing container (2) of stainless steel is so folded at its insert section (4) that a V-shaped section is formed which enters by its pointed region into the viscous synthetic material (5) with adhesive properties, displaces this and thus forms a non-detachable connection with the mounting base (3) of plastics material.

7. Dishwashing machine according to claim 5, **characterised in that** the insert region (4) is provided with breaches (7) through which the displaced synthetic material (5) with adhesive properties penetrates and after hardening forms a mechanically positive connection between synthetic material (5) with adhesive properties and rinsing container (2) of stainless steel.

8. Method of connecting a mounting base (3), which consists of plastics material, of a dishwashing machine with a rinsing container (2), **characterised in that** the rinsing container (2) of stainless steel is inserted into a groove-shaped receptacle (6), which is filled with a synthetic material (5) with adhesive properties, of the mounting base (3), displaces the viscous synthetic material (5) with adhesive properties during the mounting, the synthetic material (5) with adhesive properties finally hardens and the mounting base (3) of plastics material thus non-detachably connects with the rinsing container (2) of stainless steel.

## Revendications

1. Lave-vaisselle composé d'un fond de montage (3) en matière plastique et d'une cuve de lavage (2), une partie substantielle de la face supérieure du fond de montage (3) en matière plastique constituant le fond de la cuve de lavage (2), et les parois latérales de la cuve de lavage (2) étant réalisées, pour l'essentiel, en acier inoxydable, des zones d'assemblage entre le fond de montage (3) en matière plastique et la cuve de lavage (2) en acier inoxydable étant prévues au niveau des parois latérales et la paroi arrière de la cuve de lavage (2), les zones d'assemblage étant réalisées par un logement (6) en forme de rainure sur le fond de montage (3) en matière plastique et une partie insérable (4) correspondante étant réalisée sur les parois latérales et la paroi arrière de la cuve de lavage (2) en acier inoxydable, **caractérisé en ce que** le logement (6) en forme de rainure est rempli d'une matière plastique (5) avec des caractéristiques collantes.

2. Lave-vaisselle selon la revendication 1, **caractérisé en ce que** la partie insérable (4) située sur les parois latérales et la paroi arrière de la cuve de lavage (2), au montage de la cuve de lavage (2), s'enfonce dans la matière plastique (5) avec des caractéristiques collantes et y demeure.

3. Lave-vaisselle selon la revendication 2, **caractérisé en ce que** la partie insérable (4) située sur les parois latérales et la paroi arrière de la cuve de lavage (2) en acier inoxydable est pourvue de perforations (7) qui permettent à la matière plastique (5) avec des caractéristiques collantes de traverser la partie insérable (4).

4. Lave-vaisselle selon l'une des revendications précédentes, **caractérisé en ce que** la face intérieure de la cuve de lavage (2) comporte, au niveau de la zone d'assemblage, uniquement un dénivellement qui marque la zone de jonction entre la matière plastique et l'acier inoxydable.

5. Lave-vaisselle selon l'une des revendications 1 à 3, **caractérisé en ce que** la face intérieure de la cuve de lavage (2) est réalisée sensiblement sans dénivellement au niveau de la zone d'assemblage entre matière plastique et acier inoxydable.

6. Lave-vaisselle selon l'une des revendications précédentes, **caractérisé en ce que** la cuve de lavage (2) en acier inoxydable est repliée de manière telle, au niveau de sa partie insérable (4), qu'une partie en V est réalisée, laquelle s'enfonce avec sa partie pointue dans la matière plastique visqueuse (5) avec des caractéristiques collantes, la refoule et établit ainsi une liaison indétachable avec le fond de montage (3) en matière plastique.

7. Lave-vaisselle selon la revendication 5, **caractérisé en ce que** la zone insérable (4) est pourvue de perforations (7) par lesquelles la matière plastique refoulée (5) avec des caractéristiques collantes pénètre et établit, après le durcissement, une liaison par complémentarité de forme entre la matière plastique (5) avec des caractéristiques collantes et la cuve de lavage (2) en acier inoxydable.

8. Procédé pour assembler un fond de montage (3) en matière plastique d'un lave-vaisselle et une cuve de lavage (2), **caractérisé en ce que** la cuve de lavage (2) en acier inoxydable est placée dans un logement (6) en forme de rainure du fond de montage (3) et rempli d'une matière plastique (5) avec des caractéristiques collantes, refoule la matière plastique visqueuse (5) avec des caractéristiques collantes pendant le montage, la matière plastique (5) avec des caractéristiques collantes finit par durcir et relie ainsi de manière indétachable le fond de montage (3) en matière plastique à la cuve de lavage (2) en acier inoxydable.
